(19) Europäisches Patentamt

European Patent Office

Office européen des brevets

(11) Veröffentlichungsnummer: **0 022 584**
**B1**

(12) **EUROPÄISCHE PATENTSCHRIFT**

(45) Veröffentlichungstag der Patentschrift:
10.08.83

(51) Int. Cl.³: **F 02 B 37/12**

(21) Anmeldenummer: **80200487.9**

(22) Anmeldetag: **23.05.80**

(54) Bypasssteuereinrichtung für turboaufgeladene Verbrennungsmotoren.

(30) Priorität: **11.07.79 CH 6463/79**

(43) Veröffentlichungstag der Anmeldung:
**21.01.81 Patentblatt 81/3**

(45) Bekanntmachung des Hinweises auf die Patenterteilung:
**10.08.83 Patentblatt 83/32**

(84) Benannte Vertragsstaaten:
**CH DE FR GB LI**

(56) Entgegenhaltungen:
**FR-A-762 475**
**FR-A-2 265 980**
**FR-A-2 308 792**
**GB-A-1 069 510**
**US-A-2 710 521**

(73) Patentinhaber: **BBC Aktiengesellschaft Brown, Boveri & Cie., Haselstrasse, CH-5401 Baden (CH)**

(72) Erfinder: **Zumstein, Bruno, Dipl.-Ing., Sonnenbergstrasse 27, CH-6005 Luzern (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Bypasssteuereinrichtung für turboaufgeladene Verbrennungsmotoren

Die vorliegende Erfindung betrifft eine Bypasssteuereinrichtung für turboaufgeladene Verbrennungsmotoren nach dem Oberbegriff des Patentanspruchs 1.

Mit Bypasseinrichtungen lässt sich bekanntlich das Teillastverhalten turboaufgeladener Verbrennungsmotoren verbessern. Dabei wird ein vom jeweiligen Betriebszustand des Motors abhängiger Anteil der verdichteten Ladeluft über eine Bypassleitung an eine vor der Abgasturbine liegende Stelle der Abgasleitung eingeführt. Auf diese Weise erhält der Motor mehr Luft als bei der Turboaufladung ohne Bypass. Zu diesem Zweck weist die Bypasseinrichtung ein Bypassventil auf, das durch irgendeine motorlastabhängige Grösse als Führungsgrösse gesteuert werden kann. Die Ventilerhebung im Bypass verläuft dabei so, dass im Leerlauf- und im unteren Teillastbereich eine grosse und mit zunehmender Last eine immer weiter abnehmende Luftmenge überströmt, bis nahe der Vollast das Ventil ganz schliesst und das Überströmen von Bypassluft unterbunden wird.

Bei einer bekannten, in der FR-A Nr. 2308792 beschriebenen Bypasseinrichtung wird beispielsweise als Führungsgrösse zur Steuerung des Bypassluftstromes die über dem Bypass herrschende Druckdifferenz zwischen der verdichteten Ladeluft und den Abgasen am Turbineneintritt im Verhältnis zum Ladedruck verwendet.

Die Verwendung dieser Führungsgrösse hat den Vorteil, dass keine zusätzlichen Signalerzeuger für die Steuerung der Betätigungselemente für das Bypassventil benötigt werden. Andererseits erfordert die richtige Dimensionierung der pneumatischen Elemente wegen des schwierig vorausberechenbaren Betriebsverhaltens der Kombination Abgasturbine plus Verdichter einen umfangreichen Versuchsaufwand.

Die im kennzeichnenden Teil des Patentanspruchs definierte Erfindung entstand aus der Aufgabenstellung, eine Bypasssteuereinrichtung zu schaffen, bei der nur der Ladedruck als Führungsgrösse benutzt wird, wodurch sich eine erhebliche Vereinfachung der Einrichtung ergibt.

Zudem soll im Leerlauf eine Rezirkulation der Abgase vermieden werden und der Bypass vorerst geschlossen bleiben.

Die Erfindung wird im folgenden unter Bezugnahme auf das in der Zeichnung dargestellte Ausführungsbeispiel näher beschrieben. In der Zeichnung stellen dar:

Fig. 1 einen Turboladermotor mit einer Bypasseinrichtung,

Fig. 2 eine Ausführungsform der dafür vorgesehenen erfindungsgemässen Bypasssteuereinrichtung, und

Fig. 3 ein Detail einer weiteren Ausführungsform.

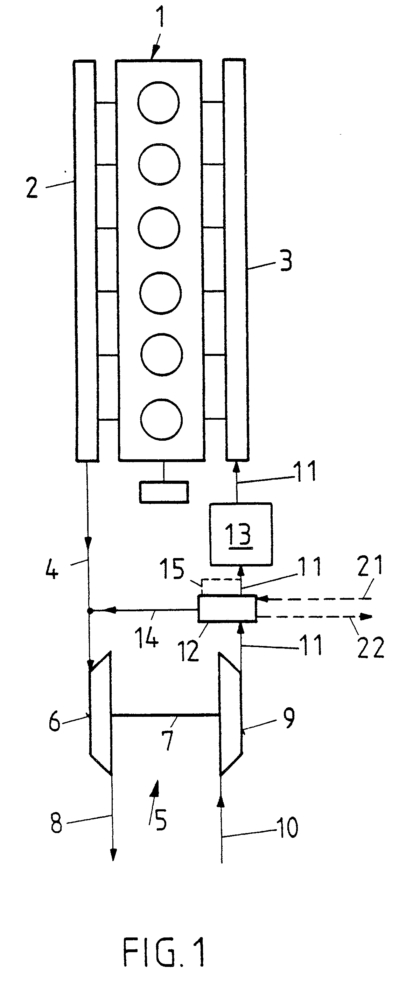

Der in Fig. 1 schematisch dargestellt Sechszylinderturboladermotor 1 weist einen Abgassammler 2 und einen Ladeluftaufnehmer 3 auf. Die Abgase gelangen über ein Abgasrohr 4 in die Abgasturbine 6 des Turboladers 5 und verlassen sie durch ein Auspuffrohr 8. Die Abgasturbine 6 ist durch eine Welle 7 mit dem Verdichter 9 verbunden, der durch eine Ansaugleitung 10 Luft ansaugt und sie verdichtet über eine Ladeluftleitung 11 durch das Bypasssteuergehäuse 12 in einen Ladeluftkühler 13 und weiter in den Ladeluftaufnehmer 3 drückt, aus dem die Zylinder ihre Verbrennungsluft erhalten. Die Bypassleitung 14 verbindet das Bypasssteuergehäuse 12 mit einer Stelle des Abgasrohres vor dem Eintritt in die Turbine 6. Über eine Steuerluftleitung 15 wird aus der Ladeluftleitung 11 Ladeluft zur Steuerung des Bypassventils abgezweigt.

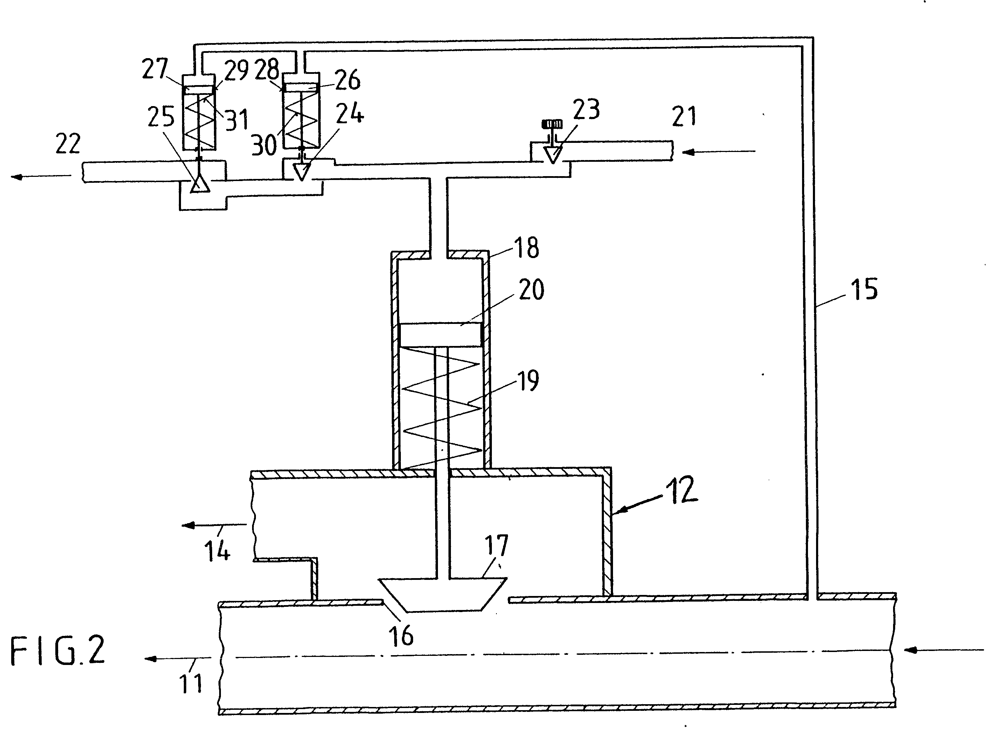

Die Bypasssteuereinrichtung ist in Fig. 2 schematisch dargestellt. Das Steuergehäuse 12 steht über eine Ventilöffnung 16 mit der Ladeluftleitung 11 und über die Bypassleitung 14 mit dem Abgasrohr 4 in Verbindung. Das mit der Ventilöffnung 16 zusammenwirkende Bypassventil 17 ist als Tellerventil ausgebildet, das am oberen Ende seines Ventilschaftes einen in einem Betätigungszylinder 18 verschiebbaren, durch eine Druckfeder 19 belasteten Kolben 20 aufweist.

Die Einrichtung benutzt als Arbeitsmittel für die Steuerung ein Fluid unter etwa konstantem Druck, wie z.B. Luft aus einem Druckluftnetz, Öl aus einem Hydraulikaggregat oder auch aus dem Schmierölkreislauf des Motors. Die Zuleitung und die Ableitung des Arbeitsmittels sind in den beiden Figuren mit 21 bzw. 22 bezeichnet.

Im Abschnitt der Arbeitsmittelleitung zwischen Zuleitung 21 und Ableitung 22 befinden sich ein für einen bestimmten Motor fest einstellbares Drosselventil 23, das den maximalen Massenstrom des Arbeitsmittels durch das Ventil begrenzt und damit in der Zuleitung 21 einen konstanten Druck aufrechterhält, sowie zwei Steuerdrosselventile 24 und 25, die ladedruckabhängig den Strömungsquerschnitt durch ihre Sitze und damit den Arbeitsmitteldruck zwischen diesen beiden Drosseln und der festen Drossel 23 und damit über dem Kolben 20 des Betätigungszylinders 18 steuern. Durch entsprechende Einstellung des Drosselventils 23 lassen sich der für einen gegebenen Motor erforderliche Druck im Betätigungszylinder 18 und damit die Stellkräfte für die Betätigung des Bypassventils 17 einstellen.

Die Schäfte der beiden Steuerdrosselventile 24 und 25 sind starr mit Kolben 26 und 27 verbunden. Diese befinden sich in Steuerzylindern 28 und 29 und werden im Ruhezustand von Druckfedern 30 und 31 nach oben gedrückt, so dass dann das erste Steuerdrosselventil 24 ganz offen und das zweite Steuerdrosselventil 25 ganz geschlossen ist. Die Feder 30 des ersten Steuerdrosselventils 24 ist steifer als die Feder 31 des zweiten Steuerdrosselventils 25.

Die aus der Ladeluftleitung 11 abzweigende Steuerluftleitung 15 mündet in die beiden Steuerzylinder 28 und 29. Im Leerlauf und bei demgemäss geringem Ladeluftdruck ist zunächst das Steuerdrosselventil 25 geschlossen und das Steuerdrosselventil 24 ganz offen. Wegen des geschlossenen Ventils 25 stellt sich über dem Kolben 20 des Bypassventils 17 ein Druck ein, der das Bypassventil geschlossen hält. Damit wird eine Rezirkulation der Abgase in dieser Phase vermieden. Mit zunehmender Last und somit steigendem Ladeluftdruck öffnet dieser wegen der weicheren Feder 31 und der gleich grossen beaufschlagten Kolbenflächen der Kolben 26 und 27 zunächst das Ventil 25, wodurch der Druck über dem Kolben 20 des Bypassventils 17 sinkt und der Bypass rasch voll geöffnet wird. Mit weiter zunehmendem Ladeluftdruck überwindet die Kraft auf den Kolben 26 auch den Widerstand der steiferen Feder 30, so dass das Ventil 24 im schliessenden Sinne bewegt wird und bei Annäherung an den Vollastzustand ganz geschlossen wird. Entsprechend verläuft der Bypassstrom von seinem Höchstwert nach dem Öffnen des Ventils 25 kontinuierlich abnehmend bis zum vollständigen Schliessen des Ventils 24.

Grösse und Verlauf des Bypassstromes können durch entsprechende Einstellung des festen Drosselventils 23 und entsprechende Auslegung der Ventilerhebungskurven der beiden Steuerdrosselventile 24 und 25 in der gewünschten Weise beeinflusst werden, hauptsächlich durch Wahl der Federsteifigkeiten, Ventildurchtrittsquerschnitte und Kolbenflächen. Anstelle unterschiedlicher Steifigkeiten der beiden Federn 30 und 31 können bei gleicher Steifigkeit auch die Kolbenflächen unterschiedlich gross ausgeführt werden.

Auch eine Kombination verschiedener Kolbenflächengrössen mit verschieden steifen Federn bzw. mit der gewünschten Ventilerhebung angepassten, in Serie geschalteten Federn, durch die eine geknickte Federkennlinie erhalten wird, sind möglich.

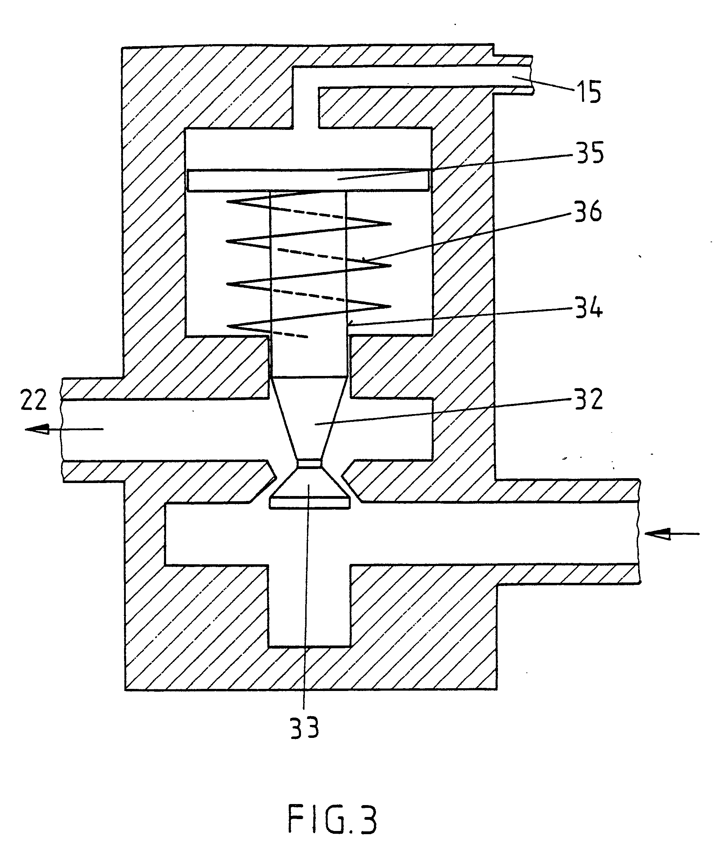

Anstelle der bei der Ausführung nach Fig. 2 benutzten, aus den beiden Ventilen 24 und 26 bestehenden Steuerdrosselkombination kann die in Fig. 3 dargestellte, platzsparende Bauart verwendet werden. Sie kombiniert die zwei Ventilkegel 32 und 33 in einem Drosselventilkörper 34, dessen Schaft mit einem Kolben 35 starr verbunden ist. Die Wirkungsweise dieser Kombination ist die gleiche wie bei jener nach Fig. 2: Bei kleinem Ladedruck sperrt der Ventilkegel 33 den Massenstrom des als Arbeitsmittel dienenden Fluids ab, das Bypassventil ist zwecks Verhinderung einer Abgasrezirkulation geschlossen. Mit steigender Last wird der Ventilkegel 33 entgegen der Kraft der Druckfeder 36 von seinem Sitz abgehoben, das Bypassventil wird geöffnet. Bei weiter zunehmender Last engt der obere Ventilkegel 32 den Durchflussquerschnitt bis zum vollständigen Schliessen vor Erreichen der Vollast immer weiter ein und dementsprechend wird auch der Bypassstrom kontinuierlich gedrosselt und schliesslich ganz unterbunden.

Durch entsprechende Gestaltung bzw. Dimensionierung der Ventilkegel 32 und 33, ihrer Sitzflächen im Gehäuse, des Kolbens 35 und der Druckfeder 36 lässt sich, wie bei der oben beschriebenen Ausführung, jede gewünschte Ventilerhebungskurve verwirklichen.

Bezeichnungsliste:

| 1 | Sechszylinderturboladermotor |
|---|---|
| 2 | Abgassammler |
| 3 | Ladeluftaufnehmer |
| 4 | Abgasrohr |
| 5 | Turbolader |
| 6 | Abgasturbine |
| 7 | Welle |
| 8 | Auspuffrohr |
| 9 | Verdichter |
| 10 | Ansaugleitung |
| 11 | Ladeluftleitung |
| 12 | Bypasssteuergehäuse |
| 13 | Ladeluftkühler |
| 14 | Bypassleitung |
| 15 | Steuerluftleitung |
| 16 | Ventilöffnung |
| 17 | Bypassventil |
| 18 | Betätigungszylinder |
| 19 | Druckfeder |
| 20 | Kolben |
| 21 | Zuleitung des Arbeitsmittels |
| 22 | Ableitung des Arbeitsmittels |
| 23 | Einstellbares Drosselventil |
| 24 | Steuerdrosselventil |
| 25 | Steuerdrosselventil |
| 26 | Kolben des Ventils 24 |
| 27 | Kolben des Ventils 25 |
| 28 | Steuerzylinder |
| 29 | Steuerzylinder |
| 30 | Druckfeder |
| 31 | Druckfeder |
| 32 | Ventilkegel |
| 33 | Ventilkegel |
| 34 | Drosselventilkörper |
| 35 | Kolben |
| 36 | Druckfeder |

**Patentansprüche**

1. Bypasssteuereinrichtung für turboaufgeladene Verbrennungsmotoren, mit einer vom Ladedruck abhängigen Öffnungscharakteristik für ein Bypassventil (17) in einer Bypassleitung (14), die eine stromabwärts des Verdichters (9) liegende Stelle der Ladeluftleitung (11) mit einer vor dem Turbineneintritt befindlichen Stelle der Abgasleitung (4) verbindet, gekennzeichnet durch einen Fluidkreislauf (21, 22), bestehend aus einer Quelle für ein unter Druck stehendes Fluid, einem von diesem Fluid beaufschlagbaren Betätigungszylinder (18) für das Bypassventil (17), einem Drosselventil (23) mit fest einstellbarem Drosselquerschnitt, das in einer Zuleitung (21) zwischen der Fluidquelle und dem Betätigungszylinder (17) angeordnet ist, sowie durch eine in der Strömungsrichtung des Fluids hinter dem Betätigungszylinder (17) vorhandene, durch Federn (30, 31; 36) belastete Steuerdrosselkombination mit zwei Schliessorganen (24, 25; 32, 33), die über eine von der Ladeluftleitung (11) abzweigende Steuerluftleitung (15) über Kolben (26, 27; 35) vom Ladeluftdruck betätigbar sind, wobei die Federn (30, 31; 36) im Ruhezustand das erste Schliessorgan (24 bzw. 32) offen und das zweite Schliessorgan (25 bzw. 33) geschlossen halten.

2. Bypasssteuereinrichtung nach Anspruch 1, dadurch gekennzeichnet, dass die Steuerdrosselkombination aus zwei durch Druckfedern (30, 31) belasteten Steuerdrosselventilen (24, 25) besteht, wobei die Druckfeder (30) des ersten Steuerdrosselventils (24) steifer ist als die Druckfeder (31) des zweiten Steuerdrosselventils (25), und dass die druckbeaufschlagten Kolbenflächen der beiden Kolben (26, 27) gleich sind.

3. Bypasssteuereinrichtung nach Anspruch 1, dadurch gekennzeichnet, dass die Steuerdrosselkombination aus zwei durch Druckfedern (30, 31) belasteten Steuerdrosselventilen (24, 25) besteht, wobei die beiden Druckfedern (30, 31) die gleiche Federkennlinie aufweisen und die druckbeaufschlagte Kolbenfläche des Kolbens (26) des ersten Steuerdrosselventils (24) kleiner ist als die des Kolbens (27) des zweiten Steuerdrosselventils (25).

4. Bypasssteuereinrichtung nach Anspruch 1, dadurch gekennzeichnet, dass die Steuerdrosselkombination aus einem Drosselventilkörper (34) mit zwei koaxialen Ventilkegeln (32, 33) besteht und der Drosselventilkörper einen Kolben (35) aufweist.

5. Bypasssteuereinrichtung nach Anspruch 4, dadurch gekennzeichnet, dass die auf den Drosselventilkörper (34) wirkende Druckfeder aus in Serie geschalteten Federn zusammengesetzt ist, um eine der gewünschten Ventilerhebungskurve entsprechende geknickte Federkennlinie zu erhalten.

## Claims

1. By-pass control device for turbo-charged internal combustion engines, with an opening characteristic for a by-pass valve (17) in a by-pass duct (14) dependent on the supercharge pressure, the by-pass duct (14) connecting a position on the supercharge air duct (11) situated downstream of the compressor (9) with a position on the exhaust gas duct (4) situated before the turbine inlet, wherein there is a fluid circuit (21, 22), consisting of a source for a fluid under pressure, an operating cylinder (18) for the by-pass valve (17) and subject to the action of this fluid, a throttle valve (23) with a fixed setting throttle section and situated in a supply duct (21) between the fluid source and the operating cylinder (17), and a control throttle combination with two closure devices (24, 25; 32, 33), which is loaded by springs (30, 31; 36) and is located after the operating cylinder (17) in the flow direction of the fluid, the closure devices being operable by supercharge air pressure by means of pistons (26, 27; 35) and a control air line (15) branching off from the supercharge air duct (11),

with the springs (30, 31; 36) in the rest condition keeping the first closure device (24 or 32) open and the second closure device (25 or 33) closed.

2. By-pass control device according to claim 1, wherein the control throttle combination consists of two control throttle valves (24, 25) loaded by compression springs (30, 31), the compression spring (30) of the first control throttle valve (24) being stiffer than the compression spring (31) of the second control throttle valve (25) and the piston area of the two pistons (26, 27) which is subject to pressure being equal.

3. By-pass control device according to claim 1, wherein the control throttle combination consists of two control throttle valves (24, 25) loaded by compression springs (30, 31), the two compression springs (30, 31) having the same spring characteristic and the piston area subject to pressure of the piston (26) of the first control throttle valve (24) being smaller than that of the piston (27) of the second control throttle valve (25).

4. By-pass control device according to claim 1, wherein the control throttle combination consists of a throttle valve body (34) with two coaxial valve cones (32, 33) and the throttle valve body has piston (35).

5. By-pass control device according to claim 4, wherein the compression spring acting on the throttle valve body (34) is made of springs connected in series in order to obtain a discontinuous spring characteristic corresponding to the desired valve lift curve.

## Revendications

1. Dispositif de commande de dérivation pour moteurs à combustion interne suralimentés par turbocompresseur, présentant une caractéristique d'ouverture dépendant de la pression de suralimentation pour une valve de dérivation (17) dans une conduite de dérivation (14) qui raccorde un endroit de la conduite d'air de suralimentation (11) situé en aval du compresseur (9) à un endroit de la conduite de gaz d'échappement (4) précédant l'entrée de la turbine, caractérisé par un circuit de fluide (21, 22) comprenant une source de fluide sous pression, un cylindre d'actionnement (18) pour la valve de dérivation (17) pouvant être sollicité par ce fluide, une valve d'étranglement (23) présentant une section d'étranglement réglable fixe qui est installée dans une conduite d'admission (21) entre la source de fluide et le cylindre d'actionnement (18), ainsi qu'un dispositif d'étranglement de commande combiné sollicité par des ressorts (30, 31; 36) et présent derrière le cylindre d'actionnement (17) dans le sens d'écoulement du fluide, comprenant deux organes de fermeture (24, 25; 32, 33) qui peuvent être actionnés par la pression d'air de suralimentation à l'intervention d'une conduite d'air de commande branchée sur la conduite d'air de suralimentation (11) par l'intermédiaire de pistons (26, 27; 35), les ressorts (30, 31; 36), dans la position de repos, maintenant le premier organe de fermeture (24, 32) ouvert et le second organe de fermeture (25, 33) fermé.

2. Dispositif de commande de dérivation suivant la revendication 1, caractérisé en ce que le dispositif d'étranglement de commande combiné est formé de deux valves d'étranglement de commande (24, 25) sollicitées par des ressorts de pression (30, 31), le ressort de pression (30) de la première valve d'étranglement de commande (24) étant plus fort que le ressort de pression (31) de la seconde valve d'étranglement de commande (25) et les surfaces des deux pistons (26, 27) sollicitées par la pression sont égales.

3. Dispositif de commande de dérivation suivant la revendication 1, caractérisé en ce que le dispositif d'étranglement de commande combiné comprend deux valves d'étranglement de commande (24, 25) sollicitées par des ressorts de pression (30, 31), les deux ressorts de pression (30, 31) présentant la même courbe d'élasticité, et la surface du piston (26) de la première valve d'étranglement de commande (24) sollicitée par la pression étant inférieure à celle du piston (27) de la seconde valve d'étranglement de commande (25).

4. Dispositif de commande de dérivation suivant la revendication 1, caractérisé en ce que le dispositif d'étranglement de commande combiné comprend un corps de valve d'étranglement (34) présentant deux cônes de valves coaxiaux (32, 33) et le corps de valve d'étranglement présente un piston (35).

5. Dispositif de commande de dérivation suivant la revendication 4, caractérisé en ce que le ressort de pression agissant sur le corps de valve d'étranglement (34) est formé de ressorts disposés en série pour donner une courbe d'élasticité coudée correspondant à la courbe de levée souhaitée de la valve.

FIG. 1

FIG.2

FIG.3